# EUROPÄISCHE PATENTANMELDUNG

(11) **EP 0 824 173 A1**
(43) Veröffentlichungstag der Anmeldung: **18.02.1998**
(21) Anmeldenummer: 97113541.3
(22) Anmeldetag: 06.08.1997
(51) Int. Cl.: E04F 13/08, F16B 5/02

(54) **Befestigungselement zur Anbringung einer Firstlatte sowie Befestigungsbolzen hierzu**

(30) Priorität: 14.08.1996 DE 19632743
(71) Anmelder: Adolf Würth GmbH & Co. KG, 74653 Künzelsau (DE)
(72) Erfinder: Schuster, Armin, 74670 Forchtenberg (DE); Huber, Kurt, 74613 Öhringen (DE)
(74) Vertreter: Patentanwälte Ruff, Beier, Schöndorf und Mütschele

(57) **Zusammenfassung**

Ein Befestigungselement zur Anbringung einer Firstlatte an einer Firstpfette weist ein insbesondere aus Blech bestehendes Beschlagteil (1) mit einer Durchstecköffnung (6) auf, durch die ein Befestigungsbolzen (7) gesteckt ist. Der Befestigungsbolzen (7) weist unterhalb seines Kopfes (8) auf der Unterseite des Beschlagteils (1) eine Schlüsselfläche (13) sowie ein Gewinde (14) auf. Nach Befestigen des Befestigungselementes an der Firstpfette und Einlegen der Firstlatte kann der Abstand von der Firstpfette noch verändert werden.

## Beschreibung

Bei hölzernen Dachstühlen wird der First des Dachstuhls von einer Firstpfette gebildet. Oberhalb der Firstpfette wird dann noch mit Abstand eine Firstlatte angebracht, die die Firstziegel tragen soll. Die Anbringung muß mit Abstand geschehen, da auf die Außenseite des Dachstuhls zunächst noch die Dachlatten und die Ziegel aufgebracht werden müssen. Die Firstlatte wird von dem Dachdecker befestigt. Bislang ist es üblich, hierzu ein U-förmiges Steckblech zu verwenden, dessen Abmessungen dem Querschnitt der Latte entsprechen. Dieses Steckblech wird mit Hilfe von durchgesteckten Nägeln angenagelt. Üblich ist auch ein U-förmiges Blech mit einem angeschweißten Nagel, ein sogenannter First- und Gratnagel. Der Abstand von der Firstpfette erfolgt nach Augenmaß des Dachdeckers bzw. nach Vorgabe des Ziegelherstellers.

Diese Methode hat den Vorteil, daß nach Einlegen der Firstlatte und Anbringen der Ziegel die Firstlatte noch etwas der Firstpfette angenähert werden kann, indem der Dachdecker ein fach mit dem Hammer, den er sowieso bei sich führt, auf die Oberseite der Firstlatte im Bereich eines Nagels schlägt.

Die Methode hat jedoch den Nachteil, daß ein zu tief eingeschlagenes Steckblech wieder herausgezogen werden muß. Dies bedeutet einen erhöhten Montageaufwand und der Halt geht verloren.

Es ist bereits ein höhenverstellbarer Lattenhalter für Dachstuhlkonstruktionen bekannt (DE-A1-39 33 037). Dieser enthält einen aus einem gebogenen Blechstreifen gebildeten Fuß und ein nach oben offenes U-förmiges Kopfstück, die durch eine Gewindestange miteinander verbunden sind. Der Abstand zwischen Kopfstück und Fuß kann vor dem Einlegen der Firstlatte in das Kopfstück verändert werden, nicht aber anschließend.

Weiterhin bekannt ist eine Halterung für eine Firstlatte (DE-C1-39 18 390), bei der ein mit einem Nagel zu befestigendes Kopfstück aus Holz besteht. Auf die Oberseite dieses Kopfstücks kann dann die Firstlatte angenagelt oder angeschraubt werden. Mit dieser Halterung ist eine Verstellung der Firstlatte zur Seite hin möglich, nicht aber eine Justierung ihres Abstandes von der Firstpfette.

Der Erfindung liegt die Aufgabe zugrunde, eine Möglichkeit zu schaffen, wie mit geringem Aufwand eine Firstlatte nachträglich ausgerichtet werden kann, und zwar in beiden Richtungen, d.h. nach oben und nach unten.

Zur Lösung dieser Aufgabe schlägt die Erfindung ein Befestigungselement mit den im Anspruch 1 genannten Merkmalen vor. Die Erfindung schlägt ebenfalls einen Befestigungsbolzen mit den im Anspruch 11 genannten Merkmalen vor. Weiterbildungen der Erfindung sind Gegenstand der jeweiligen abhängigen Ansprüche.

Die Befestigung der Firstlatte mit Hilfe des von der Erfindung vorgeschlagenen Befestigungselementes geschieht in fast der gleichen Weise wie bisher. Der Dachdecker befestigt das Beschlagteil mit Abstand an der Firstpfette nach Augenmaß. Anschließend kann er die Firstlatte an dem Beschlagteil anbringen. Er kann nun mit Hilfe beispielsweise eines einfachen Schraubenschlüssels an der Schlüsselfläche des Schaftes angreifen und eine Nachjustierung in beide Richtungen vornehmen. Er kann dies, ohne die Firstlatte abnehmen zu müssen, da die Verdrehung des Bolzenschaftes nicht durch Angriff an dem Kopf erfolgen muß. Beispielsweise kann der Schraubenschaft ein relativ steiles Doppelganggewinde aufweisen, so daß er den Befestigungsbolzen nur wenig verdrehen muß, um den Bolzen weiter ein- oder auszuschrauben.

Aufgrund der Möglichkeit der Nachjustierung selbst bei eingelegter Firstlatte braucht die erstmalige Befestigung nach Augenmaß nicht sehr sorgfältig geschehen, so daß sich hierdurch die Arbeitsgeschwindigkeit noch steigern läßt.

Eine Möglichkeit, wie der Befestigungsbolzen ausgebildet sein kann, besteht darin, ihn als Schraube mit einem Senkkopf auszubilden. Dann kann der Handwerker sie beispielsweise mit einem Akku-Elektroschrauber einschrauben.

Eine zweite Möglichkeit, die von der Erfindung vorgeschlagen wird, besteht darin, den Bolzen als Schraubnagel mit einem Senkkopf auszubilden. Dies hat den Vorteil, daß der Dachdecker die Befestigung, wie bisher üblich, mit dem Hammer vornehmen kann.

Wenn das Beschlagteil an der Firstlatte formschlüssig oder kraftschlüssig festgelegt wird, wie bei den bisherigen Steckblechen, so kann eine Justierung mit Schraubwerkzeug auch erfolgen, wenn der Befestigungsbolzen einfach durch die Durchstecköffnung hindurchgesteckt ist. Unter Durchstecköffnung ist im übrigen eine Öffnung zu verstehen, die das Durchstecken des Befestigungsbolzens zwar ermöglicht, jedoch kann hierzu auch ein gewisser Aufwand erforderlich sein.

In Weiterbildung der Erfindung kann vorgesehen sein, daß der Bolzen eine sein Herausziehen aus dem Beschlagteil behindernde Ausbildung aufweist. Da der Bolzen nur zum Teil in die Firstpfette eingeschlagen oder eingeschraubt wird, wird damit erreicht, daß das Beschlagteil am Kopf des Bolzens hängenbleibt, also nicht herabfällt.

Insbesondere kann vorgesehen sein, daß der Bolzen unterhalb seines Kopfes eine Verdickung aufweist, insbesondere in Form eines umlaufenden Wulstes oder einer Rippe. Dieser Wulst kann einerseits zur Festlegung dienen, andererseits aber auch zur Abdichtung, so daß kein Wasser durch den Zwischenraum zwischen dem Bolzen und der Durchstecköffnung hindurchgelangen kann. Diese Abdichtung ist jedoch nicht unbedingt erforderlich.

In Weiterbildung der Erfindung kann vorgesehen sein, daß das Beschlagteil im Bereich der Durchstecköffnung trichterförmig ausgebildet ist. Diese Trichterform läßt sich beim Herstellen des Beschlagteils in einfacher Weise mit herstellen.

Insbesondere kann vorgesehen sein, daß die Trichterform der Umgebung der Durchstecköffnung des Beschlagteils an die Kopfform des Bolzens angepaßt ist. Dies führt nicht nur zu einem besseren Verteilen der Kräfte, sondern insbesondere auch dazu, daß eine möglichst gute Abdichtung erreicht wird.

Erfindungsgemäß kann in Weiterbildung die Schlüsselfläche an dem Schaft durch Kaltverformen, beispielsweise Schlagen oder Pressen, hergestellt werden. Damit kann dafür gesorgt werden, daß die Kosten für das Befestigungselement niedrig gehalten werden.

Insbesondere kann vorgesehen sein, daß das Beschlagteil aus Blech besteht, beispielsweise mit einer U-Form, die der Querschnittsform üblicher Firstlatten angepaßt ist. Dabei ist die Durchstecköffnung im Steg des U angeordnet, insbesondere mittig. Die Schenkel können ebenfalls Löcher aufweisen, durch die hindurch der Dachdecker die Firstlatte an dem Beschlagteil annageln kann. Die Erfindung schlägt ebenfalls einen Befestigungsbolzen vor, der insbesondere aber nicht ausschließlich zusammen mit dem Beschlagteil zur Befestigung von Firstlatten dient.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: perspektivisch eine Ansicht eines einen Teil des Befestigungselementes dienenden Beschlagteils;
- Fig. 2: eine Ansicht des in dem abgebrochen dargestellten Beschlagteil eingesetzten Befestigungsbolzens;
- Fig. 3: in vergrößertem Maßstab einen Teilschnitt durch das Beschlagteil im Bereich der Durchstecköffnung;
- Fig. 4: eine der Fig. 3 entsprechende Darstellung bei einer leicht geänderten Ausführungsform;
- Fig. 5: einen Querschnitt längs Linie V-V in Fig. 2 durch die Schlüsselfläche des Befestigungsbolzens.

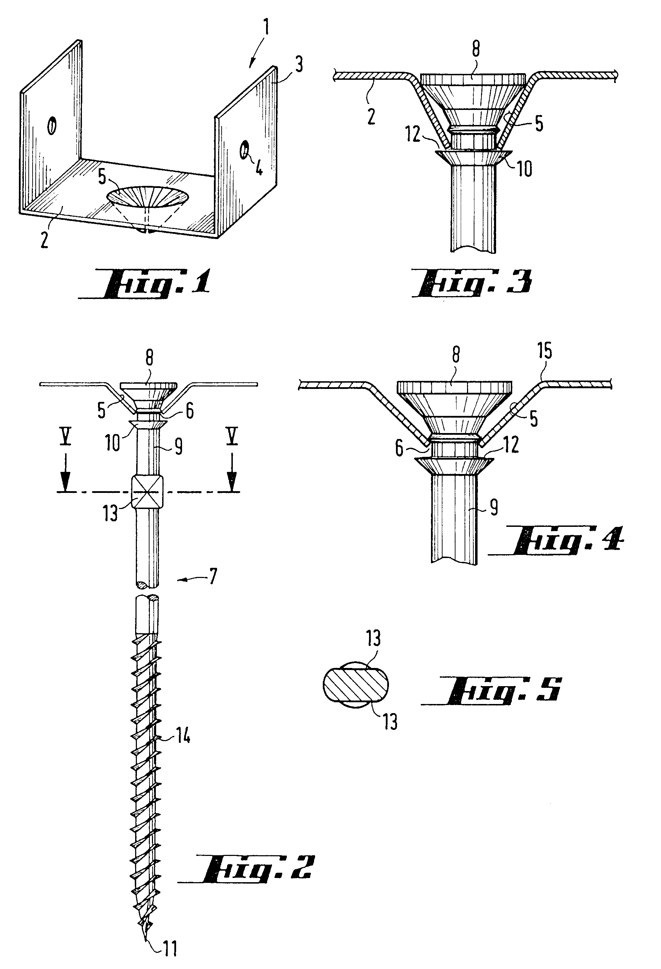

Fig. 1 zeigt perspektivisch die Ansicht eines Beschlagteils 1, das zusammen mit dem in Fig. 2 zu sehenden Befestigungsbolzen das Befestigungselement nach der Erfindung bildet. Das Beschlagteil 1 ist aus Blech durch Stanzen und Biegen hergestellt, und weist die Form eines U auf, bei dem der Steg 2 und die beiden sich daran anschließenden Schenkel 3 jeweils eben ausgebildet sind und die Schenkel 3 mit dem Steg 2 einen rechten Winkel einschließen. Der Innenabstand der beiden Schenkel entspricht dabei der Breite einer üblichen Firstlatte, deren Dicke mindestens so hoch sein soll wie die Höhe der Stege 3. Die Firstlatte kann an dem Beschlagteil 1 dadurch befestigt werden, daß sie zwischen die Stege eingelegt wird und dort festgenagelt wird. Zu diesem Zweck weisen die beiden Stege je ein Befestigungsloch 4 auf.

In der Mitte des Steges 2 des Beschlagteils 1 ist ein Trichter 5 geprägt, der sich zu der den Schenkeln 3 abgewandten Seite des Steges 2 hin erstreckt. In der Mitte des Trichters 5 ist eine Durchstecköffnung 6 gebildet, siehe auch Fig. 2.

In Fig. 2, die das Beschlagteil 1 nur teilweise zeigt, ist in die Durchstecköffnung 6 am Boden des Trichters 5 ein Befestigungsbolzen 7 eingesteckt. Der Befestigungsbolzen 7 ist in Form einer Schraube mit einem Senkkopf 8 ausgebildet. Der Senkkopf 8 weist eine solche Abmessung auf, daß er in der Trichterform 5 des Beschlagteils 3 untergebracht werden kann. Der Rand der Öffnung 6 liegt an dem Schaft 9 des Befestigungsbolzens 7 an.

Mit einem gewissen Abstand unterhalb des Senkkopfes 8 weist der Befestigungsbolzen 7 in seinem Schaft 9 eine umlaufende, im Querschnitt dreieckige Rippe 10 auf. Die zur Schraubenspitze 11 gerichtete Unterseite der Rippe 10 verläuft schräg, während die Oberseite 12 fast rechtwinklig zur Schraubenlängsachse verläuft. Die Rippe 10 verhindert einerseits das Herabfallen des Beschlagteils 1 an dem Schaft 9 und bildet andererseits eine Anlagefläche für den Rand der Öffnung 6, die zur Abdichtung dienen kann.

Der Schaft 9 des Befestigungsbolzens 7 weist mit einem gewissen Abstand von der Rippe 10 eine Schlüsselfläche 13 auf. Diese ist durch ein Kaltverformen des Schaftes hergestellt. Sie überragt den Umfang des Schaftes 9 nur unwesentlich, so daß sie das Durchschieben des Befestigungsbolzens 7 durch die Öffnung 6 nicht behindert.

Im Bereich der unteren Hälfte weist der Schaft 9 des Befestigungsbolzens 7 ein Doppelganggewinde 14 auf. Dieses reicht bis zur Schraubenspitze 11.

Die Form der Schlüsselfläche 13 kann der Fig. 5 entnommen werden. Der die Schlüsselfläche 13 aufweisende Abschnitt des Schraubenschaftes 9 ist durch ein Kaltverformen nach Art einer Quetschung hergestellt, so daß ein Abschnitt mit zwei parallel zueinander verlaufenden, ebenen Schlüsselflächen 13 entsteht. An diesen Schlüsselflächen 13 kann ein Schraubenschlüssel angesetzt werden. Das Abgleiten des Schraubenschlüssels in beiden Längsrichtungen des Befestigungsbolzens 7 wird dadurch verhindert, daß der Schaft 9 im übrigen Bereich einen größeren Durchmesser aufweist als der Abstand der beiden Schlüsselflächen 13.

Fig. 3 zeigt in vergrößertem Querschnitt eine Möglichkeit, wie die Trichterform 5 des Beschlagteils 1 an die Form des Befestigungsbolzens angepaßt ist. Der Rand der Öffnung 6 liegt dabei auf der Oberseite 12 der umlaufenden Rippe 10 an, also längs einer geschlossenen Kreislinie. Gleichzeitig liegt der Trichter im Bereich seines oberen Randes 15 an der Unterseite des Schraubenkopfes 8 an. Dies bedeutet, daß längs zweier geschlossener kreisförmiger Linien eine Anlage erfolgt, so daß das Beschlagteil während der Befestigung nicht zu stark taumelt.

Fig. 4 zeigt eine Ausführungsform, bei der ebenfalls der Rand der Öffnung 6 an dem Schraubenschaft 9 anliegt, so daß eine Abdichtung längs dieser kreisförmigen Linie gegeben ist. Dagegen liegt der Schraubenkopf 8 nicht an dem Trichter 5 an. Beide Ausführungsformen sind für den Zweck der Erfindung geeignet, wobei die Ausführungsform nach Fig. 3 die bevorzugte ist.

Das in den Figuren dargestellte Befestigungselement wird folgendermaßen benutzt. Das Befestigungselement wird in der aus Fig. 2 ersichtlichen Form geliefert. Der Befestigungsbolzen ist also schon durch die Öffnung hindurchgesteckt und das Beschlagteil 3 ist an dem Befestigungsbolzen dadurch festgelegt. Der Dachdecker schraubt mit einem Schrauber den Befestigungsbolzen 7 von oben her in die Firstpfette so weit ein, wie ihm dies für seinen Zweck gerade richtig erscheint, d.h. mit einem Abstand, den er abschätzt.

Nach dem Anbringen aller Befestigungselemente längs der Firstpfette legt er die Firstlatte zwischen die Schenkel 3 des Beschlagteils 1 ein und nagelt dieses fest. Anschließend reguliert er mit einem Schraubenschlüssel, den er an den Schlüsselflächen 13 ansetzt, den korrekten Abstand der Firstlatte von der Firstpfette ein. Er kann dabei den Abstand verkleinern oder vergrößern.

Der in den Figuren dargestellte Befestigungsbolzen kann auch mit anderen Beschlagteilen verwendet werden, beispielsweise mit einem Holzklotz, durch den er hindurchgesteckt ist.

Anstelle des Doppelganggewindes 14, das ein vollständig ausgewalztes, scharfkantiges Gewinde ist, könnte auch ein Befestigungsbolzen 7 verwendet werden, der ein nur unvollständig bzw. schwach ausgebildetes Gewinde aufweist, wie man es üblicherweise bei Schraubnägeln findet. Diese werden mit dem Hammer eingeschlagen, wobei das Schraubnagelgewinde nur dazu dient, noch eine gewisse Korrektur durch Vorwärts- und Rückwärtsdrehen durchzuführen.

## Patentansprüche

1. Befestigungselement zur Anbringung einer Firstlatte an einer Firstpfette, mit
1.1 einem an der Firstlatte festlegbaren Beschlagteil (1), das
1.1.1 eine Durchstecköffnung (6) aufweist, sowie mit
1.2 einem Befestigungsbolzen (7), der
1.2.1 durch die Durchstecköffnung (6) des Beschlagteils (1) hindurchgesteckt wird,
1.2.2 einen Kopf (8) und
1.2.3 einen Schaft (9) aufweist, wobei
1.3 der Schaft (9) ein Gewinde (14) und
1.3.1 im Bereich zwischen dem Kopf (8) und dem Gewinde (14) eine bei an der Firstlatte befestigtem Beschlagteil (1) zugängliche Schlüsselfläche (13) aufweist, zur Verstellung des Abstands zwischen Firstlatte und Firstpfette.

2. Befestigungselement nach Anspruch 1, bei dem der Befestigungsbolzen (7) als Schraube insbesondere mit einem Senkkopf aufgebildet ist.

3. Befestigungselement nach Anspruch 1, bei dem der Befestigungsbolzen (7) als Schraubnagel insbesondere mit einem Senkkopf ausgebildet ist.

4. Befestigungselement nach einem der vorhergehenden Ansprüche, bei dem der Befestigungsbolzen (7) eine, sein Herausziehen aus dem Beschlagteil (1) behindernde Ausbildung aufweist.

5. Befestigungselement nach einem der vorhergehenden Ansprüche, bei dem der Befestigungsbolzen (7) unterhalb seines Kopfes (8) eine Verdickung aufweist, insbesondere in Form einer umlaufenden Rippe (10) bzw. eines Wulstes.

6. Befestigungselement nach einem der vorhergehenden Ansprüche, bei dem das Beschlagteil (1) im Bereich der Durchstecköffnung (6) trichterförmig ausgebildet ist.

7. Befestigungselement nach einem der vorhergehenden Ansprüche, bei dem die Trichterform (5) der Umgebung der Durchstecköffnung (6) des Beschlagteils (1) an die Kopfform des Befestigungsbolzens (7) angepaßt ist.

8. Befestigungselement nach einem der vorhergehenden Ansprüche, bei dem die Schlüsselfläche (13) an dem Schaft (9) durch Kaltverformen hergestellt ist.

9. Befestigungselement nach einem der vorhergehenden Ansprüche, bei dem das Beschlagteil (1) aus Blech besteht.

10. Befestigungselement nach einem der vorhergehenden Ansprüche, bei dem das Beschlagteil (1) U-förmig ausgebildet ist und die Durchstecköffnung (6) im Steg (2) der U-Form ausgebildet ist, wobei insbesondere der Abstand der Schenkel (3) des Beschlagteils (1) der Breite einer üblichen Firstlatte entspricht.

11. Befestigungsbolzen, insbesondere als Befestigungsbolzen (7) eines Befestigungselementes nach einem der vorhergehenden Ansprüche, mit einem Kopf (8) und einem Schaft (9), wobei der Schaft (9) ein Gewinde (14) und im Beeich zwischen dem Kopf (8) und dem Gewinde (14) eine Schlüsselfläche (13) aufweist.

12. Befestigungsbolzen nach Anspruch 11, enthaltend eines oder mehrere der sich auf den Befestigungsbolzen (7) beziehenden Merkmale nach einem oder mehreren der Ansprüche 2 bis 11.
